# EUROPÄISCHE PATENTSCHRIFT

(11) **EP 2 079 540 B1**
(45) Veröffentlichungstag und Bekanntmachung des Hinweises auf die Patenterteilung: **29.12.2010**
(21) Anmeldenummer: 07821485.5
(22) Anmeldetag: 18.10.2007
(51) Int. Cl.: B01D 46/02, B01D 27/06, B01D 46/00

(54) **FILTERELEMENT MIT VERKLEBTER ENDSCHEIBE**
FILTER ELEMENT WITH GLUED END CAP
ÉLÉMENT FILTRANT À DISQUE TERMINAL ENCOLLÉ

(30) Priorität: 18.10.2006 DE 202006016102 U
(43) Veröffentlichungstag der Anmeldung: 22.07.2009
(73) Patentinhaber: Mann + Hummel GmbH, 71638 Ludwigsburg (DE)
(72) Erfinder: AMESÖDER, Dieter, 74321 Bietigheim-Bissingen (DE); SCHRECKENBERGER, Dieter, 71672 Marbach (DE)
(86) Internationale Anmeldenummer: PCT/EP2007/061120
(87) Internationale Veröffentlichungsnummer: WO 2008/046876

(56) Entgegenhaltungen:
- EP-A- 0 206 336
- WO-A-94/11083
- DE-A1- 10 135 080
- DE-B- 1 062 675

## Beschreibung

### Technisches Gebiet

Die Erfindung geht von einem Filterelement zur Filterung von Gasen oder Flüssigkeiten mit einem hohlzylindrischen sternförmig gefalteten Filtermedium aus, das stirnseitig verklebte Endscheiben aufweist, nach den gattungsgemäßen Merkmalen des Hauptanspruchs.

Es ist beispielsweise aus der DE 102004063346 A 13.07.2006 bekannt, dass ein hohlzylindrisches Filterelement mit einem sternförmig gefalteten Filtermedium aus Vlies oder Papier an den Stirnseiten jeweils mit einer Endscheibe, zum Beispiel aus Kunststoff oder Metall, verklebt werden kann.

Solche Endscheiben sind notwendig, um das Filtermedium aus einem relativ weichen Material dichtend in ein Filtergehäuse einer Filteranordnung einfügen zu können und dabei auch eine sichere Trennung der Seite des Filterelements, an die das ungefilterte Medium anströmt, von der Seite mit dem abströmenden gefilterten Medium zu erreichen.

Weiterhin ist auch eine Filteranordnung aus der DE 4206519 A bekannt, bei der ein solches sternförmig gefaltetes hohlzylindrisches Filterelement mit an den Stirnseiten dichtend abdeckenden Platten, beispielsweise aus Metall, oder mit folienförmigen Dichtmaterialien versehen ist. Diese platten- oder folienförmigen Dichtungen ragen radial innen mit einem bestimmten Betrag in den Innenzylinder herein, so dass auch eine Abdichtung zu einem Mittelrohr erreichbar ist.

Aus der DE 101 35 080 A1 ist ein Ringfilterelement aus zick-zack-förmig gefaltetem Bahnmaterial mit einem radial zurückgesetzten Stirnkantenbereich bekannt.

Aus der WO 94/11083 ist ein Filterelement bekannt, bei welchem ein Filterbalg mit einer Endscheibe verklebt ist.

Bei den zuvor beschriebenen bekannten Filterelementen kommt es häufig zu undichten Stellen im Bereich der Verklebung der stirnseitigen Endstelle des sternförmig gefalteten Filtermediums mit der jeweiligen Endscheibe, sodass auszufilternde Partikel von der Roh- oder Schmutzseite des Filterelements auf die Reinseite gelangen können. Da diese Filterelemente mit ihrer Faltenteilung in der Regel so ausgelegt sind, dass die Aufnahmekapazität des Filterelements ein Optimum erreicht, liegen die Falten häufig sehr eng aneinander, was insbesondere aufgrund der sternförmigen Faltung am Innendurchmesser des Filterelements der Fall ist. An diesen Stellen kommt es daher oft zu Undichtigkeiten, da der Klebstoff beim Einpressen des Filtermediums an den dicht gefalteten Stellen am Innendurchmesser nahezu vollständig verdrängt wird und somit aufgrund der hier sehr nahe aneinander liegenden Falten nicht zwischen die Falten kriechen kann, um diese dicht zu umschließen. Darstellung der Erfindung

Die Erfindung betrifft ein Filterelement mit einem hohlzylindrischen, sternförmig gefalteten Filtermedium und angeklebten Endscheiben an mindestens einer der Stirnseiten des Filtermediums. Um eine sichere Abdichtung des Filterelements auch am Innendurchmesser des hohlzylindrischen, sternförmig gefalteten Filtermediums zu erreichen, ist erfindungsgemäß in vorteilhafter Weise die jeweilige stirnseitige Kontur des Filtermediums, der Zwischenraum zwischen dem Filtermedium und der jeweiligen Endscheiben und/oder die jeweilige Kontur der Endscheibe so gestaltet, dass am Innendurchmesser des hohlzylindrischen sternförmig gefalteten Filtermediums ein größeres Volumen des Klebstoffes zwischen dem Filtermedium und der jeweiligen Endscheiben durch einen größeren Spalt für die Verklebung anordbar ist als am Außendurchmesser des Filtermediums.

Erfindungsgemäß wird zwischen der jeweiligen Stirnseite des Filtermediums und der jeweiligen Endscheibe am Außendurchmesser des Filtermediums ein nur teilweise über die Stirnseite des Filtermediums reichendes Distanzstück angeordnet, das hier auch zu einem größeren Spalt für die Verklebung bzw. zu einem größeren Klebstoffvolumen am Innendurchmesser führt.

Mit der Erfindung ist auf einfache Weise erreicht, dass im Bereich des Innendurchmessers des auch als Filterbalg bezeichneten Filtermediums zwischen der Endscheibe und dem Filtermedium ein ausreichender Raum geschaffen wird, in dem eine hinreichende Menge Klebstoff nach dem Aufbringen der Endscheibe verbleiben kann. In einem Aushärtevorgang für den Klebstoff kann dieser dann in die Falten auch am Innendurchmesser kriechen und diese somit verkleben und abdichten.

Besondere Vorteile können mit dem erfindungsgemäßen Filterelement erzielt werden, wenn das Filterelement Bestandteil einer Filteranordnung für Kraftstoff in einem Kraftfahrzeug ist, da hier die Dichtigkeit der Filteranordnung eine besonders große Bedeutung hat. Insbesondere bei Kraftfahrzeugen mit einem Einspritzsystem für Kraftstoff, das mit hohen Drücken und empfindlichen Einspritzdüsen arbeitet, können Partikel, die unter Umgehung des Filterelements im Kraftstoff verblieben sind, ansonsten einen großen Schaden anrichten.

### Kurze Beschreibung der Figuren der Zeichnung

Ausführungsbeispiele der Erfindung werden anhand der Zeichnungen erläutert. Es zeigen:

Figur 1 einen Schnitt durch ein herkömmliches Filterelement mit stirnseitig auf dem Filtermedium angeklebten Endscheiben,

Figur 2 eine Draufsicht auf das Filterelement nach der Figur 1 mit einer teilweise sichtbar gemachten sternförmigen Faltung des Filtermediums,

Figur 3 einen Teilschnitt aus dem Bereich eines stirnseitigen Aufliegens der Endscheibe auf dem Filtermedium, bei dem nach dem Stand der Technik am Innendurchmesser nahezu kein Klebstoff in das Filtermedium eindringt und

Figur 4 einen Teifschnitt aus dem Bereich eines stirnseitigen Aufliegens der Endscheibe auf dem Filtermedium, bei dem nach einem Ausführungsbeispiel ein Distanzstück angeordnet ist.

### Weg(e) zur Ausführung der Erfindung

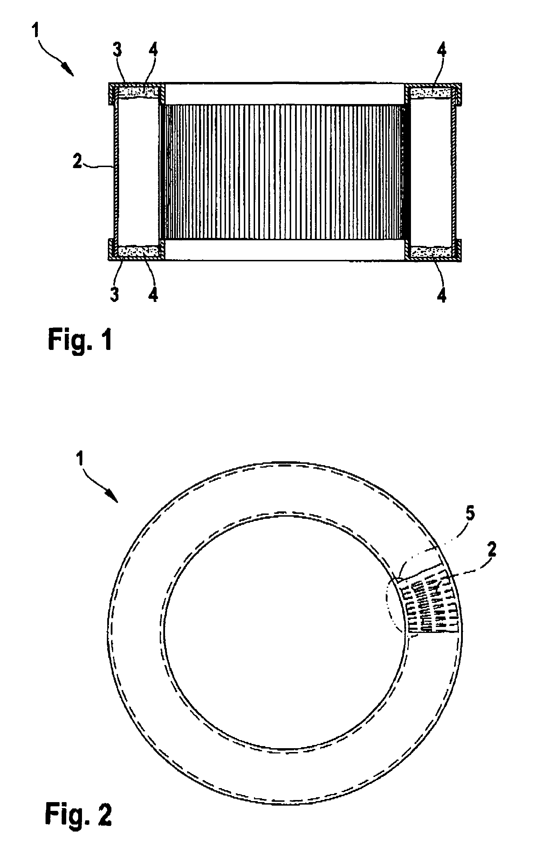

In Figur 1 ist ein herkömmlicher Aufbau eines Filterelements 1 mit einem hohlzylindrischen, sternförmig gefalteten Filtermedium 2 gezeigt. Stirnseitig sind Endscheiben 3 auf das Filtermedium 2, beispielsweise aus Papier oder Vlies, mit einem hier jeweils an den Verbindungsstellen angedeuteten Klebstoff in einer Verklebung 4 befestigt. Figur 2 zeigt in einer Draufsicht auf das Filterelement 1 in einem Ausschnitt 5 schematisch die Faltung des Filtermediums 2 ebenfalls in der Draufsicht, sodass hier die sehr eng anliegenden Falten am Innendurchmesser des Filtermediums 2 erkennbar sind.

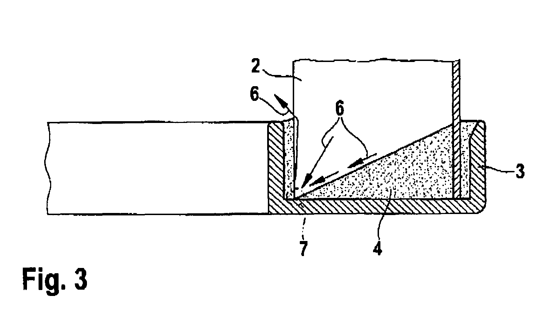

Aus einem Teilschnitt nach Figur 3 ist ersichtlich, dass aus dem Bereich eines stirnseitigen Aufliegens der Endscheibe 3 auf dem Filtermedium 2, bei der üblichen Anordnung der Endscheibe 3 nach dem Stand der Technik, am Innendurchmesser nahezu kein Klebstoff in das Filtermedium eindringt. Mit Pfeilen 6 ist angedeutet, dass hier Partikel, beispielsweise bei der Filterung von Kraftstoff in einem Kraftfahrzeug, durch einen Bereich 7 am Innendurchmesser des Filtermediums 2 gelangen können, da hier nahezu kein Klebstoff der Verklebung 4, aufgrund der eng anliegenden Falten (vgl. Bereich 5 aus der Figur 2), eingedrungen ist. Somit ist eine sichere Trennung der Seite des Filterelements 1, an die der ungefilterte Kraftstoff hier von außen anströmt, von der Seite mit dem abströmenden gefilterten Kraftstoff in ein Mittelrohr am Innendurchmesser des Filterelements 1 hier nicht möglich.

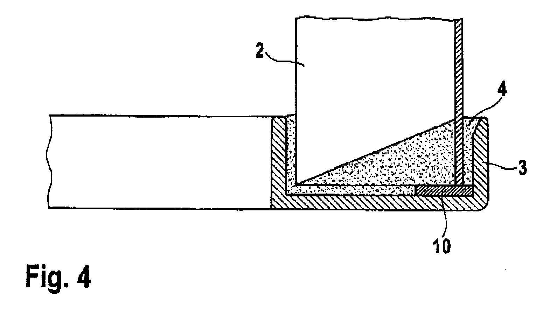

Ein Ausführungsbeispiel der Erfindung nach Figur 4 weist zwischen der jeweiligen Stirnseite des Filtermediums 2 und der jeweiligen Endscheibe 3 am Außendurchmesser des Filtermediums 2 ein nur teilweise über die Stirnseite des Filtermediums 2 reichendes Distanzstück 10 auf, das hier auch dazu führt, dass ein größeres Volumen des Klebstoffs der Verklebung 4 am Innendurchmesser des Filtermediums 2 vorhanden ist und somit ebenfalls auch am Innendurchmesser zu einer wirkungsvollen Verklebung und Abdichtung des Filtermediums 2 führt.

## Patentansprüche

1. Filterelement (1) mit einem hohlzylindrischen, sternförmig gefalteten FIltermedium (2) und angeklebten Endscheiben (3) an mindestens einer der Stirnseiten des Filtermediums (2) , **dadurch gekennzeichnet, dass** die jeweilige stirnseitige Kontur des Filtermediums (2), der Zwischenraum zwischen dem Filtermedium (2) und der jeweiligen Endscheibe (3) und die jeweilige Kontur der Endscheibe (3) so gestaltet ist, dass am Innendurchmesser des hohlzylindrischen sternförmig gefalteten Filtermediums (2) ein vergrößerter Verklebungsspalt (4) zwischen dem Filtermedium (2) und der jeweiligen Endscheiben (3) entsteht, wobei zwischen der jeweiligen Stirnseite des Filtermediums (2) und der Endscheibe (3) am Außendurchmesser des Filtermediums (2) ein nur teilweise über die Stirnseite des Filtermediums (2) reichendes Distanzstück (10) zur Vergrößerung des Verklebungsspaltes am Innendurchmesser (4) angeordnet ist.

2. Filterelement nach einem der vorhergehenden Ansprüche, **dadurch gekennzeichnet, dass** das Filterelement (1) Bestandteil einer Filteranordnung für die Kraftstofffllterung in einem Kraftfahrzeug ist.

3. Filterelement nach einem der vorhergehenden Ansprüche, **dadurch gekennzeichnet, dass** das Filtermedium (2) aus Papier oder Vlies hergestellt ist.

## Claims

1. Filter element (1) with a hollow cylindrical, star-shaped pleated filter medium (2) and affixed end plates (3) on at least one of the front ends of the filter medium (2), **characterized in that** the respective front end contour of the filter medium (2), the space between the filter medium (2) and the respective end plate (3) and the respective contour of the end plate (3) are designed in such a way that at the inner diameter of the hollow cylindrical, star-shaped pleated filter medium (2) a larger gluing gap (4) between the filter medium (2) and the respective end plate (3) is created, a distance piece (10) projecting only partially over the front side of the filter medium (2) for enlarging the gluing gap at the inner diameter (4) being disposed between the respective front side of the filter medium (2) and the end plate (3) at the outer diameter of the filter medium (2).

2. Filter element according to one of the above claims, **characterized in that** the filter element (1) is part of the filter arrangement for the fuel filtration in a motor vehicle.

3. Filter element according to one of the above claims, **characterized in that** the filter medium (2) is made of paper or non-woven fabric.

## Revendications

1. Elément filtrant (1) avec un milieu filtrant (2) cylindrique creux et plié en forme d'étoile et des plaques d'extrémité (3) collées sur au moins une des faces frontales du milieu filtrant (2), **caractérisé en ce que** le contour frontal correspondant du milieu filtrant (2), l'interstice entre le milieu filtrant (2) et la plaque d'extrémité (3) respective et le contour respectif de la plaque d'extrémité (3) sont conçus de manière à ce que, sur le diamètre intérieur du milieu filtrant (2) cylindrique creux et plié en forme d'étoile, une fente de collage agrandie (4) soit créée entre le milieu filtrant (2) et les plaques d'extrémité (3) respectives, une pièce entretoise (10) s'étendant, entre la face frontale respective du milieu filtrant (2) et la plaque d'extrémité (3) sur le diamètre extérieur du milieu filtrant (2), uniquement partiellement au-dessus de la face frontale du milieu filtrant (2) afin d'agrandir la fente de collage sur le diamètre intérieur (4).

2. Elément filtrant selon l'une des revendications précédentes, **caractérisé en ce que** l'élément filtrant (1) fait partie intégrante d'un ensemble de filtre destiné au filtrage de carburant dans un véhicule automobile.

3. Elément filtrant selon l'une des revendications précédentes, **caractérisé en ce que** le milieu filtrant (2) est fabriqué en papier ou en non-tissé.
